Europäisches Patentamt

European Patent Office

Office européen des brevets

(11) Publication number : **0 503 910 A1**

# (12) EUROPEAN PATENT APPLICATION

(21) Application number : **92302054.9**

(22) Date of filing : **11.03.92**

(51) Int. Cl.⁵ : **C01B 31/20, F25J 3/08**

(30) Priority : **15.03.91 GB 9105478**

(43) Date of publication of application :
**16.09.92 Bulletin 92/38**

(84) Designated Contracting States :
**DE GB NL**

(71) Applicant : **AIR PRODUCTS AND CHEMICALS, INC.**
**7201 Hamilton Boulevard**
**Allentown, PA 18195-1501 (US)**

(72) Inventor : **Prentice, Alan Lindsay**
**17 Manor Crescent**
**Surbiton, Surrey KT5 8LG (GB)**
Inventor : **Allam, Rodney John**
**Westacre, 33 Guildown Road**
**Guildford, Surrey (GB)**

(74) Representative : **Burford, Anthony Frederick et al**
**W.H. Beck, Greener & Co. 7 Stone Buildings Lincoln's Inn**
**London WC2A 3SZ (GB)**

(54) Carbon dioxide and acid gas removal and recovery process for fossil fuel fired power plants.

(57)    The present invention relates to a process for removing essentially all carbon dioxide and acid gases, e.g., sulfur dioxide, from the flue gas of a fossil fuel combustion power plant in which the fossil fuel (3) is completely combusted with oxygen (1) in a boiler/furnace (5). The flue gas (7) from the boiler/furnace (5) is cooled (23), compressed (33) and dried (35) to produce a compressed, water-free, flue gas (41). This compressed, water-free, flue gas (41) is cooled (43) and introduced to a first distillation column (51), thereby producing an overhead (53) rich in light components, i.e., oxygen, nitrogen, and argon, and essentially free of acid gases and a bottoms vapor (75) containing the bulk of the carbon dioxide and essentially all of the acid gases.

    The overhead (53) is cooled (55) to condense the condensibles and phase separated (57). A portion (59) of the liquid portion is returned to the top of the first distillation column (51) as reflux ; the vapor is expanded (68) and warmed (43) to recover refrigeration.

    The bottoms vapor stream (75) is then introduced to a second distillation column (77) for distillation into an essentially pure carbon dioxide overhead (81) and an essentially pure acid gas liquid bottoms (91).

FIG. 1

EP 0 503 910 A1

The present invention is related to a gas separation process for the removal and recovery of carbon dioxide and acid gases from the flue gas of a fossil fuel fired power plant.

It has become apparent that the combustion of fossil fels in power stations produces acid gases, such as $CO_2$, $SO_2$, $SO_3$, nitrogen oxides, which pollute the atmosphere causing acid rain and which are a major contributor to global warming, the so-called greenhouse effect. The problem is more acute when coal or lignite are fuels because of their high sulphur content and high carbon to hydrogen ratio. A need has arisen to devise methods of burning fossil fuels, particularly solid fuels, in a completely non-polluting manner, such that the acid gases which are the major sources of atmospheric pollution can be removed. Of particular concern is $CO_2$. No power stations at present have provision for $CO_2$ removal. It is the object of this invention to provide a means of removing all the acid gas components of fossil fuel combustion in a single process plant so that they can be separately disposed of.

The need for $CO_2$ removal from fossil fuel power station flue gas has become apparent only in the last 10 to 15 years due to the linking of rising $CO_2$ concentrations in the atmosphere with global warming. The method of disposal of the $CO_2$ is not covered by this invention directly, but, for example, would involve disposal in depleted gas and oil fields, or for enhanced oil recovery or in salt cavities. There has even been a suggestion that liquid $CO_2$ could be disposed of in the very deep ocean bottoms where it would remain as liquid, and where the absence of currents would not promote mixing or diffusion. Several methods of $CO_2$ removal from power stations flue gas have been proposed.

The first is to scrub the flue gas with a chemical solvent such as an aqueous solution of MEA which will remove the $CO_2$ by reaction. The flue gas is brought into intimate contact with the solvent in a countercurrent gas liquid scrubbing tower having a packing to give high interfacial area. The $CO_2$ is removed from the solvent by allowing it to flow down a second packed tower countercurrent to rising vapors produced by boiling the solvent in the column sump using condensing steam bled from the power station turbines. The lean solvent leaving the column sump would be pumped to the top of the absorber column after passing through a cooler where heat is transferred to the rich MEA. A problem which arises in this system is the reaction which occurs between MEA and sulphur dioxide forming a salt which must be treated with an alkali such as NaOH or $Na_2CO_3$ to regenerate the MEA. In practice it would be necessary to remove the $SO_2$ from the stack gas before $CO_2$ removal with MEA to minimize the consumption of chemicals used for regeneration. Thus to practice this technology, the power station would have an $SO_2$ scrubbing system followed by a $CO_2$ scrubbing system.

The second method has been proposed by Frederick Horn and Meyer Steinberg of the Brookhaven National Laboratory in 1981. This involves burning the fossil fuel in a mixture of pure oxygen and partially recycled flue gas in a steam raising furnace. The flue gas does not contain any nitrogen from the air, only some residual nitrogen from the fuel. The main components of the waste gas are $CO_2$, $H_2O$ and acid gases such as $SO_2$, nitrogen oxides together with unreacted oxygen. The composition will depend on the fuel used. The excess flue gas was to be compressed and delivered by pipeline to be disposed of in the manner indicated. Any water present would be removed by condensation when the flue gas was cooled prior to compression. A problem arises in the scheme as proposed. The compressed fluid although predominantly $CO_2$ would also contain all the other components listed above. The resulting mixture would be highly corrosive to steel alloys normally used for gas transmission lines and would be quite unsuitable for injection into oil or gas wells because of the possible corrosion of well piping, and the likelihood of biological growth in the oil/gas formation which would block the pore structure. In addition, the unreacted oxygen would amount to up to 10% of pure oxygen feed for coal firing, and this should be recovered for use in the furnace. The scheme as described by Horn and Steinberg must be refined to make it a practical proposition by purifying the excess flue gas to produce a high purity liquid $CO_2$ stream, a noncondensible gas stream containing the excess oxygen and a liquid $SO_2$ stream, which would also contain most of the NOX and HCl produced by the power station.

A third method is disclosed in U.K. Pat. No. 1,125,505 which teaches a cryogenic gas separation process for the recovery of both argon and carbon dioxide from the flue gas of a fossil fuel fired power plant.

The present invention is an improvement to a process for the recovery and removal of carbon dioxide and acid gases from flue gas generated by a fossil fuel fired power plant. In the process, the fossil fuel is combusted, in a combustion zone, with an effective excess quantity of oxygen to assure complete combustion of the fossil fuel. In order to control flame temperature, a portion of the flue gas can be recycled to the combustion zone, and the remaining portion of the flue gas is cleaned, precooled, dried and compressed. This dry, compressed flue gas is then further cooled and separated into its constituent components by distillation in a gas separation process. The improvement, which is the gas separation process, is characterized by the following steps. The further cooled, dry, compressed flue gas is introduced to a first distillation column wherein it is distilled producing a first column overhead comprising nitrogen, oxygen, argon and carbon dioxide and a first column bottoms liquid comprising carbon dioxide and acid gases. The first column overhead is heat exchanged thereby condensing a substantial portion of the carbon dioxide contained therein and this heat exchanged overhead is phase separated producing a light component recycle stream and a first liquid carbon dioxide stream. The light component recycle stream usually is expanded and warmed to recover work and refrigeration and then at least a portion of the warmed, expanded light component recycle stream is recycled to the combustion zone. At least a portion of the first liquid carbon dioxide stream is returned to the top of the first distillation column as reflux. A vapor or liquid stream essentially consisting of carbon dioxide and acid gases is removed from the bottom of the first distillation column and introduced to an intermediate location of a second distillation column for distillation producing an essentially pure carbon dioxide overhead and an acid gases bottom liquid. The essentially pure carbon dioxide overhead is removed from the second distillation column and a portion thereof is condensed and returned as reflux to the second distillation column. The remaining portion of the overhead can be recovered as essentially pure carbon dioxide liquid or vapor product. The acid gases bottom liquid is removed from the second distillation column and a portion thereof is vaporized and returned to the bottom of the second distillation column as boil-up. The remaining portion of the removed acid gases liquid bottoms is recovered as acid gases liquid product.

The process of the present invention is particularly suitable for use with an elevated pressure cycle air separation unit as the source of oxygen and refrigeration by expanding and warming the produced nitrogen.

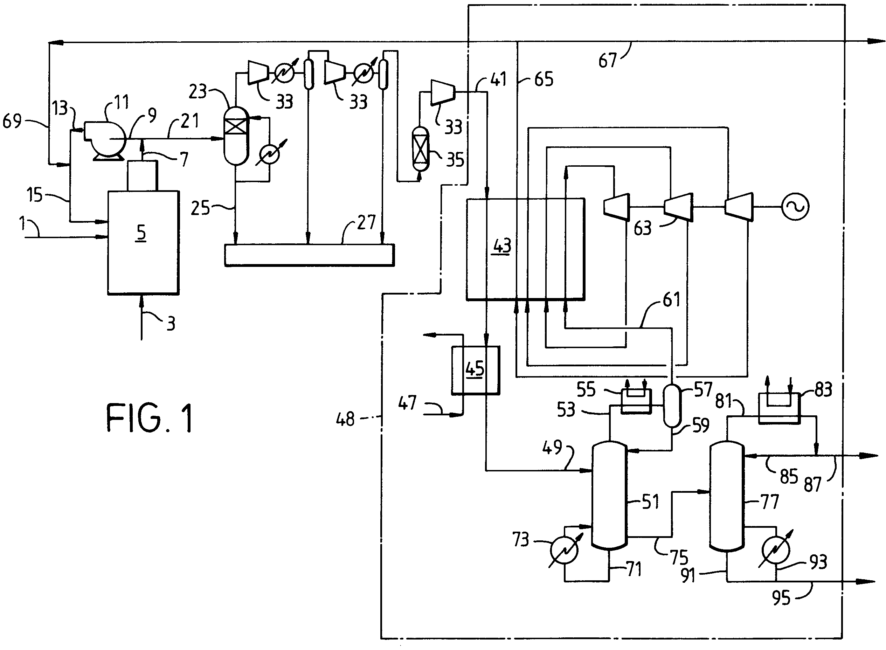

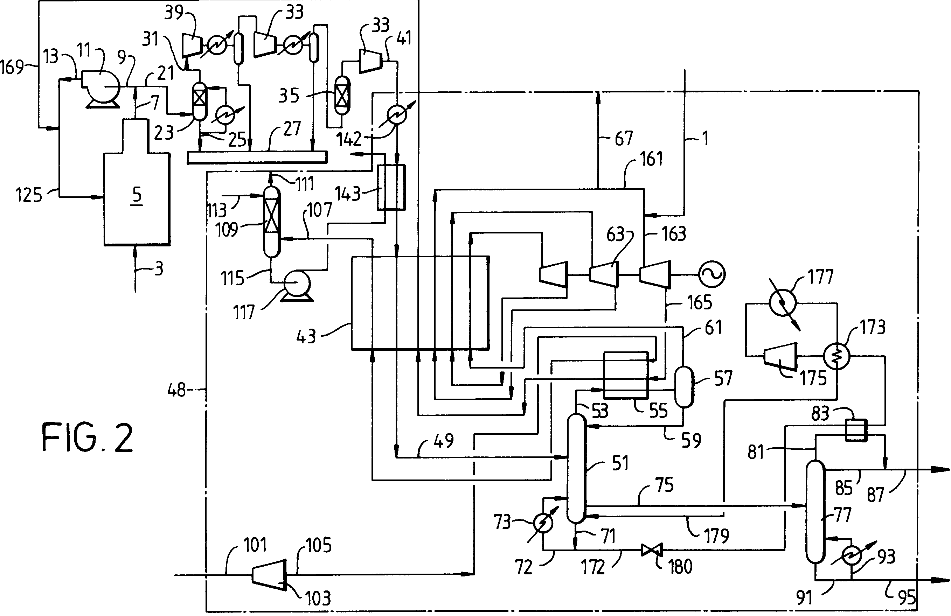

Figures 1 and 2 are schematic diagrams of two presently preferred embodiments of the process of the present invention.

The present invention is a process for removing essentially all carbon dioxide and acid gases, e.g., sulfur dioxide, from a fossil fuel combustion power plant. The removed carbon dioxide and acid gases are then separately disposed of. In the process, a sulfur containing fossil fuel is combusted with oxygen in a boiler/furnace to generate steam, which, in turn usually is used to generate electrical power.

The flue gas from the boiler/furnace is cooled, compressed and dried to produce a compressed, water-free, flue gas. This compressed, water-free, flue gas may be is further compressed and is then cooled and introduced to a first distillation column, thereby producing an overhead rich in light components, i.e., oxygen, nitrogen, and argon, and essentially free of acid gases and a bottoms vapor containing the bulk of the carbon dioxide and essentially all of the acid gases.

The overhead is cooled to condense the condensibles and phase separated. At least a portion of the liquid portion is returned to the top of the first distillation column as reflux; the vapor usually is expanded and warmed, preferably in multiple stages of expansion and heat exchange, to recover refrigeration and at least a portion recycled to the boiler/furnace.

The bottoms vapor stream is introduced to a second distillation column for distillation into an essentially pure carbon dioxide overhead and an essentially pure acid gas liquid bottoms.

The essentially pure carbon dioxide overhead usually is condensed and a portion of the condensed carbon dioxide is returned to the top of the second distillation column as reflux; the remainder is removed as product.

The process of the present invention can be further described in accordance with the embodiment shown in Figure 1. With reference to Figure 1, boiler/furnace 5 is used to produce steam which is generally to be used in condensing steam turbines for the production of electrical power. In boiler/furnace 5, fossil fuel 3 is fired with a mixture of (typically 99.5% or less) oxygen, stream 1, from an air separation plant and recycle 15 composed of compressed recycled flue gas 13 which is side stream 9 of flue gas 7 compressed using recycle blower 11 and having an exit temperature of about 160°C and light component recycle stream 69. The flowrate of oxygen stream 1 is selected in order to provide sufficient oxygen (stoichiometric and excess) to boiler/furnace 5 for complete combustion of the fossil fuel, about 10% in the case of coal. The flowrate of recycle 15 is sufficient to moderate the flame temperature, about 2100°C.

The remainder 21 of flue gas 7 is filtered in a dust filtration system (not shown) consisting of electrostatic precipitators or bag filters and then cooled by direct contact with water in contacting tower 23. Excess water in flue gas 21 condenses as it is cooled from about 160°C to about 35°C. The water in the base of tower 23 is recycled through a solids filter and a water cooler back to the top of tower 23. Excess water is sent, via stream 25, for treatment in treater 27.

The cooled gas 31 from the top of tower 23 is compressed to about 58 bars (5.8 MPa) in multistage compressor 33. Dual bed desiccant dryer 35 is used at an interstage location (shown) or at the discharge end (not shown) of multistage compressor 33 to produced dry, carbon dioxide-rich, flue gas stream 41 with a water content to below 1 ppm. Drier 35 can be thermally regenerated using a water-freed nitrogen stream from the air separation unit. Any condensed water produced by the interstage coolers of compressor 33 is sent to treater 27 for treatment.

Dry, compressed, flue gas stream 41 then enters a gas separation plant (the battery limits of gas separation plant 48 are shown by the dashed lines) at a temperature of about 65°C wherein at least a portion of the oxygen-enriched non-condensible gas is separated for recycle to the boiler, acid gases and any other heavy components are also separated leaving essentially pure liquid carbon dioxide for delivery to a pipeline system.

In the gas separation plant, gas stream 41 is cooled in heat exchanger 43 against warming process streams and further cooled in heat exchanger 45 against external refrigeration source stream 47. The cooled gas, now in line 49, is then fed to first distillation column 51 for distillation, thereby producing an overhead vapor and a bottoms liquid. The overhead, which contains essentially all of light components, i.e., oxygen, nitrogen and argon, and is essentially free of acid gases and other heavier components, is removed from column 51 via line 53 and cooled against an external refrigeration source in heat exchanger 55 thereby condensing out a significant and major portion of the condensibles contained in the overhead. The partially condensed stream is then phase separated in separator 57 thereby producing liquid reflux stream 59 and light component recycle stream 61. Liquid reflux stream 59 is fed to the top of column 51. Light component recycle stream 61, which contains approximately 15 to 20 mol percent oxygen, is warmed and expanded to recover work and refrigeration from the stream. The warming and expansion process is preferably carried out in multiple steps. Expanded, warmed, light component stream 65 is then recycled, via line 69, back to boiler/furnace 5 as part of the recycle stream 15. In order to control the concentration of inert gases, i.e., nitrogen and argon, in recycle stream 15, purge stream 67 can be removed from light component stream 65.

The bottoms liquid, which contains less than $\underline{5}$ vppm oxygen, is removed from column 51, via line 71, vaporized in heat exchanger 73 and the resultant vapor returned to column 51. A significant portion of resultant vapor is then removed from column 51, via line 75 and fed to an intermediate location of second distillation column 77 wherein it is distilled into an essentially pure carbon dioxide overhead and an acid gases bottoms liquid. The overhead is removed from column 77, via line 81 and totally condensed against cooling water in condenser 83. A portion of the condensed overhead is returned, via line 85, to the top of column 77 to provide reflux. The remainder of the condensed overhead is removed from the process, via line 87, as liquid carbon dioxide product, which has less than 10 vppm of total impurities. The acid gases bottoms liquid, which contains essentially all of the acid gases produced by boiler/furnace 5, is removed from column 77, via line 91, and from the process, via line 95, as a liquid acid gas product. In order to provide boil-up for column 77, a portion of acid gas bottoms liquid stream 91 is removed, via line 93, vaporized and fed to the bottom of column 77. The present embodiment has been described removing a vapor stream, via line 75, from column 51 and introducing it to column 77, however, an equally applicable option would be to remove a liquid stream of the bottoms liquid from column 51 and feed this liquid stream to the intermediate location of column 77.

Another embodiment of the present invention is possible, when the air separation unit used to supply the oxygen for combustion is an elevated pressure cycle air separation unit. By the term "elevated pressure", we mean that the feed air pressure to the cold box of the air separation unit is greater than 102 psia (7 bar; 700 kPa). This embodiment is shown in Figure 2. With reference to Figure 2, boiler/furnace 5 is used to produce steam which is generally to be used in condensing steam turbines for the production of electrical power. In boiler/furnace 5, fossil fuel 3 is fired with oxidizing stream 125, which is a mixture of oxygen (stream 1), compressed recycled flue gas 13 which is side stream 9 of flue gas 7 compressed using recycle blower 11 and having an exit temperature of about 160°C and light component recycle stream 161. The flowrate of oxygen stream 1 is selected in order to provide sufficient oxygen (stoichiometric and excess) to boiler/furnace 5 for complete combustion of the fossil fuel, about 10% in the case of coal. The flowrates of recycle streams 13 and 161 are sufficient to moderate the flame temperature, about 2100°C.

The remainder 21 of flue gas 7 is filtered in a dust filtration system (not shown) consisting of electrostatic precipitators or bag filters and then cooled by direct contact with water in contacting tower 3. Excess water in flue gas 21 condenses as it is cooled from about 160°C to about 35°C. The water in the base of tower 23 is recycled through a solids filter and a water cooler back to the top of tower 23. Excess water is sent, via stream 25, for treatment in treater 27.

The cooled gas 31 from the top of tower 23 is compressed to about 58 bars (5.8 MPa) in multistage compressor 33. Dual bed desiccant dryer 35 is used at an interstage location (shown) or at the discharge end (not shown) of multistage compressor 33 to produced dry, carbon dioxide-rich, flue gas stream 41 with a water content to below 1 ppm. Drier 35 can be thermally regenerated using a water-freed nitrogen stream from the air separation unit. Any condensed water produced by the interstage coolers of compressor 33 is sent to treater 27 for treatment.

Dry, compressed, flue gas stream 41 then enters a gas separation plant (the battery limits of gas separation plant 48 are shown by the dashed lines) at a temperature of about 65°C wherein at least a portion of the oxygen-enriched non-condensible gas is separated for recycle to the boiler, acid gases and any other heavy components are also separated leaving essentially pure liquid carbon dioxide for delivery to a pipeline system.

In the gas separation plant, gas stream 41, which has been precooled in heat exchangers 142 and 143, is cooled in heat exchanger 43 against warming process streams.

The cooled gas, now in line 49, is then fed to first distillation column 51 for distillation, thereby producing an overhead vapor and a bottoms liquid. The overhead, which contains essentially all of light components, i.e.,

oxygen, nitrogen and argon, and is essentially free of acid gases and other heavier components, is removed from column 51 via line 53 and cooled in heat exchanger 55 thereby condensing out a significant and major portion of the condensibles contained in the overhead. The partially condensed stream is then phase separated in separator 57 thereby producing liquid reflux stream 59 and light component recycle stream 61. Liquid reflux stream 59 is fed to the top of column 51. Light component recycle stream 61, which contains approximately 15 to 20 mol percent oxygen, is warmed and expanded to recover work and refrigeration from the stream. The warming and expansion process is preferably carried out in multiple steps. Prior to the last stage of expansion, elevated pressure oxygen stream 1 is combined with the light component recycle stream, now labelled stream 161. The combined stream 163 is then expanded. The expanded, combined stream 165 is then warmed in heat exchangers 55 and 43 to recover refrigeration and then sent, via line 169, to boiler/furnace 5 as part of oxidizing stream 125. In order to control the concentration of inert gases, i.e., nitrogen and argon, in stream 125, purge stream 67 can be removed from light component stream 161.

The bottoms liquid, which contains less than $\underline{5}$ vppm oxygen, is removed from column 51, via line 71, and split into two substreams for vaporization. The first substream in line 72 is vaporized in heat exchanger 73 and the resultant vapor returned to column 51. The second substream in line 172 is reduced in pressure across valve 180 vaporized in heat exchanger 83 against condensing column 77 overhead, heated in economizer heat exchanger 173 compressed in compressor 175 and returned via cooler 177 to the bottom of column 51 via line 179. A significant portion of resultant vapor is then removed from column 51, via line 75 and fed to an intermediate location of second distillation column 77 wherein it is distilled into an essentially pure carbon dioxide overhead and an acid gases bottoms liquid. The overhead is removed from column 77, via line 81 and totally condensed in condenser 83. A portion of the condensed overhead is returned, via line 85, to the top of column 77 to provide reflux. The remainder of the condensed overhead is removed from the process, via line 87, as liquid carbon dioxide product, which has less than 10 vppm of total impurities. The acid gases bottoms liquid, which contains essentially all of the acid gases produced by boiler/furnace 5, is removed from column 77, via line 91, and from the process, via line 95, as a liquid acid gas product. In order to provide boil-up for column 77, a portion of acid gas bottoms liquid stream 91 is removed, via line 93, vaporized and fed to the bottom of column 77.

In order to provide additional refrigeration, in place of the external refrigeration source discussed in the first embodiment, elevated pressure dry nitrogen, stream 101, from the elevated pressure air separation plant, is expanded in expander 103 to recover work and generate cold. Cold nitrogen stream 105 is warmed in heat exchangers 55 and 43 to recover refrigeration and then fed, via line 107, to direct contact water chiller 109. In direct contact water chiller 109, the nitrogen stream is contacted with cooling water 113 thereby evaporating some of the water and chilling the remaining cooling water. This chilled water is removed from contactor 109, via line 115 and pumped in pump 117 to heat exchanger 143 for precooling of the dry gas feed to gas separation unit 43. The nitrogen is vented after contact from contactor 109 via line 111.

In the embodiments described above, one important problem which should be avoided is the accumulation of noncondensible inert components in the essentially closed system. As discussed above, part of the light component recycle stream is vented via line 67 in Figure 1 or 2 to the atmosphere to control the concentration of these inerts in the process. Table 1 shows the effect of the stream 67 (purge) flowrate on the amount of $CO_2$ vented to atmosphere and on the quantity of flue gas that must be compressed for a typical system fitted to a 660 MW turbo generator with a pulverized coal fired boiler system. A choice of purge rate depends on the specification for the degree of $CO_2$ recovery required from the system.

## TABLE 1

| Purge Gas % Oxygen Recycled | Purge Stream | Oxygen Recycle Stream | Flue Gas to Compr. | Carbon Dioxide Purged | % Total Carbon Dioxide Purged |
|---|---|---|---|---|---|
| | | | kg Moles/hr | | |
| 50% | 674 | 674 | 14,442 | 281.8 | 2.3% |
| 20% | 482 | 1,930 | 15,649 | 202.7 | 1.66% |
| 5% | 359 | 6,817 | 20,768 | 152.0 | 1.25% |

The operation of a practical system for removing all acid gas components from the waste gases of a power station has been described. It is based on the proposition that if carbon dioxide, the main component, is to be separated for disposal, it must be produced as a liquid, at ambient temperature, and in a very pure form to prevent pipeline corrosion or problems in underground disposal. The plant which purifies and liquifies the $CO_2$ can be cheaply adapted to remove light components, including excess oxygen, which is recycled to the boiler and heavy components, such as $SO_2$, $NO_2$ and HCl. The method of separation is distillation, which means that the process must operate below critical pressure at all points in the system. The ease with which this complete separation can be made favors the use of pure oxygen with recycled flue gas for fossil fuel combustion to produce the $CO_2$ rich, nitrogen free gas which is fed to the compression, drying and separation system. Any non-condensibles in the system, such as argon or nitrogen, can be vented with minimal venting of $CO_2$ and zero venting of $SO_2$, NOX and HCl. The use of refrigeration in the system is necessary to allow the separation by distillation to be carried out.

## Claims

1. A process for the recovery and removal of carbon dioxide and acid gases from flue gas generated by a fossil fuel fired power plant, in which the fossil fuel is combusted in a combustion zone with an effective quantity of oxygen to assure complete combustion of the fossil fuel, said process comprising cleaning, cooling, compressing and drying the flue gas and separating the dry, compressed flue gas into its constituent components by a gas separation distillation process characterized in that:

    (a) said dry, compressed flue gas is introduced into a first distillation column to produce a first column overhead comprising nitrogen, oxygen, argon and carbon dioxide and a first column bottoms liquid comprising carbon dioxide and acid gases;

    (b) said first column overhead is cooled to condense a substantial portion of the carbon dioxide contained therein and phase separated to produce a light component stream and a first liquid carbon dioxide stream;

    (c) at least a portion of the first liquid carbon dioxide stream is returned as reflux to the top of the first distillation column;

    (d) a stream consisting essentially of carbon dioxide and acid gases is removed from the bottom of the first distillation column and introduced into a second distillation column at an intermediate location to produce an essentially pure carbon dioxide overhead and an acid gases bottom liquid.

    (e) a portion of the essentially pure carbon dioxide overhead from the second distillation column is condensed and returned to the second distillation column as reflux; and

    (f) a portion of the acid gases bottom liquid from the second distillation column is vaporized and returned to the second distillation column as boil-up.

2. A process as claimed in any one of the preceding claims, wherein at least a portion of the light component stream from the first distillation column is recycled to the combustion zone.

3. A process as claimed in any one of the preceding claims, wherein the light component stream from the first distillation column is warmed and expanded to recover work and refrigeration.

4. A process as claimed in any one of the preceding claims, wherein a portion of the flue gas from the combustion zone is recycled to said zone to control flame temperature.

5. A process as claimed in any one of the preceding claims, wherein refrigeration for the gas separation is partially provided by expansion and warming of the nitrogen product from an elevated pressure cycle air separation unit supplying oxygen to the combustion zone.

6. A process as claimed in Claim 5, wherein further refrigeration is provided for the gas separation process by producing chilled water by subsequently contacting said warmed, expanded nitrogen with cooling water in a direct contact manner.

FIG. 1

EP 0 503 910 A1

FIG. 2

EP 0 503 910 A1

## EUROPEAN SEARCH REPORT

Application Number

EP 92 30 2054

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y<br>A | WO-A-8 102 291 (CRYOPLANTS LIMITED)<br><br>* page 4 - page 6; claim 13; figure 1 * | 1<br>2,3 | C01B31/20<br>F25J3/08 |
| P,Y<br>A | EP-A-0 440 085 (AIR PRODUCTS AND CHEMICALS)<br><br>* claims 1,7,12; figure 1 * | 1<br>3,6 | |
| A | FR-A-2 158 338 (VEGYTERV VEGYIMUVEKET TERVEZO VALLALAT)<br>* claims 1,2; figure 1 * | 1,6 | |
| D,A | GB-A-1 125 505 (THE DISTILLERS COMPANY)<br>* claims 1-7 * | 1 | |

TECHNICAL FIELDS SEARCHED (Int. Cl.5)

C01B
F25J
C03B

The present search report has been drawn up for all claims

| Place of search | Date of completion of the search | Examiner |
|---|---|---|
| THE HAGUE | 22 JUNE 1992 | CUBAS ALCARAZ J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)

10